# EUROPÄISCHE PATENTSCHRIFT

(11) **EP 0 800 418 B1**
(45) Veröffentlichungstag und Bekanntmachung des Hinweises auf die Patenterteilung: **05.02.2003**
(21) Anmeldenummer: 96931807.0
(22) Anmeldetag: 14.09.1996
(51) Int. Cl.: B01D 35/153, B01D 35/30, B01D 35/16

(54) **FLÜSSIGKEITSFILTER FÜR ÖL ODER KRAFTSTOFF EINER BRENNKRAFTMASCHINE UND DAZU PASSENDER MASCHINENSEITIGER FILTERANSCHLUSSFLANSCH**
LIQUID FILTER INTENDED FOR OIL OR FUEL IN INTERNAL COMBUSTION ENGINE AND A SUITABLE ENGINE-SIDE FILTER CONNECTION FLANGE
FILTRE A LIQUIDES POUR L'HUILE OU LE CARBURANT D'UN MOTEUR A COMBUSTION INTERNE ET BRIDE DE RACCORDEMENT DU FILTRE APPROPRIEE COTE MOTEUR

(30) Priorität: 27.10.1995 DE 19539918
(43) Veröffentlichungstag der Anmeldung: 15.10.1997
(73) Patentinhaber: Hengst GmbH & Co. KG, 48147 Münster (DE)
(72) Erfinder: BAUMANN, Dieter, D-48268 Greven-Gimbte (DE)
(74) Vertreter: Schulze Horn & Partner
(86) Internationale Anmeldenummer: EP9604044
(87) Internationale Veröffentlichungsnummer: WO97016234

(56) Entgegenhaltungen:
- EP-A- 0 408 377
- EP-A- 0 653 234
- DE-A- 3 409 219
- US-A- 3 746 171
- US-A- 4 904 382
- US-A- 5 049 269

## Beschreibung

Die vorliegende Erfindung betrifft ein Flüssigkeitsfilter für Öl oder Kraftstoff einer Brennkraftmaschine und einen dazu passenden maschinenseitigen Filteranschlußflansch.

Ein erster Flüssigkeitsfilter sowie ein zugehöriger Filteranschlußflansch sind aus DE-U 94 11 212 bekannt. Das Flüssigkeitsfilter besitzt hier in seiner dem Filteranschlußflansch zugewandten Stirnwand eine stirnseitig umlaufende Nut, in die ein Axialdichtring eingelegt ist. Mit dieser Stirnwand wird das Flüssigkeitsfilter an eine entsprechende Dichtfläche des Filteranschlußflansches axial angedrückt. Die Andrückkraft wird hier durch eine im Inneren des Filtergehäuses untergebrachte hohle Befestigungsschraube aufgebracht, die mit einem einen Teil des Filteranschlußflansches bildenden Außengewindestutzen verschraubt ist.

Als nachteilig wird bei diesem bekannten Flüssigkeitsfilter angesehen, daß das Filtergehäuse zumindest im Bereich seiner Stirnwand relativ stabil und damit schwer ausgeführt sein muß, um die für die axiale Abdichtung erforderliche Kraftübertragung von der zentralen Schraube zu der radial außen liegenden Dichtung ohne Verzug oder Beschädigung des Filtergehäuses auf Dauer zu gewährleisten. Bei der Auswahl der Materialen für das Filtergehäuse ist man dadurch auf Metalle eingeschränkt, weil Kunststoff praktisch nicht in der Lage ist, die geforderten Belastungen sicher aufzunehmen. Weiterhin ist die Anbringung des bekannten Flüssigkeitsfilters an dem maschinenseitigen Filteranschlußflansch relativ aufwendig, weil die Befestigungsschraube tief im Inneren des Filtergehäuses liegt und so deren Betätigung durch ein Schraubwerkzeug erschwert wird.

Bekannt ist weiterhin aus DE 34 44 267 A1 ein Flüssigkeitsfilter mit einem einen Filtereinsatz aufnehmenden Gehäuse, das einen Abschlußteil oder Sockel mit Zulauf und Ablauf für die zu filternde Flüssigkeit aufweist, wobei der Sockel als Wärmetauscher gestaltet ist. Der Sokkel besitzt neben Durchströmkanälen für die zu filternde Flüssigkeit mit einem zentrisch angeordneten, den Abschlußteil über dessen ganze Höhe durchsetzenden Ablaufkanal auch dazu benachbarte weitere Kanäle für ein Tauscherfluid. Dabei wird innerhalb des Sockels die zu filternde Flüssigkeit in einem konzentrisch zum Ablaufkanal angeordneten Ringleitungsbereich geführt. Zwei weitere konzentrische Ringleitungskanäle sind diesseits und jenseits des Ringleitungsbereiches angeordnet. Der Abschlußteil oder Sockel besteht aus zwei ineinandergesteckten, gegeneinander abgedichteten Teilen, wobei die Abdichtung gegeneinander durch mehrere konzentrische Radialdichtungen erfolgt. Hinsichtlich der Anbringung des Flüssigkeitsfilters an einer zugehörigen Maschine, z.B. einer Brennkraftmaschine eines Kraftfahrzeuges, ist auch hier maschinenseitig ein flacher Filteranschlußflansch vorgesehen, gegen den unter Zwischenlage einer flachen Axialdichtung ein spiegelbildlich ausgebildeter Anschlußflansch des Filtergehäuses verspannbar ist.

Auch bei diesem bekannten Flüssigkeitsfilter besteht die Erfordernis, daß das Filtergehäuse im Bereich des Anschlußflansches eine hohe Stabilität aufweisen muß, um im Betrieb eine dauerhafte Dichtigkeit der Flanschverbindung sicherzustellen. Alle Materialien, die unter Temperaturund Druckeinfluß zu Verformung neigen, können deshalb nachteilig bei diesem bekannten Flüssigkeitsfilter für dessen Gehäuse, insbesondere den Abschlußteil oder Sokkel, nicht eingesetzt werden.

Aus DE 36 25 764 C1 ist ein Schmierölfilter für Verbrennungsmotoren mit einem auswechselbaren Filtereinsatz bekannt. Bei diesem Filter wird das das Filterelement aufnehmende Filtergehäuse als Wegwerfeinheit ausgebildet, die über eine sie durchdringende Mittelschraube mit einem die Zu- und Ablaufleitungen enthaltenden Gehäuse-Hauptteil fest verbunden ist. Um beim Wechseln des Filterelementes ein Austauschen der Dichtungen zu gewährleisten, ist die Wegwerfeinheit so ausgebildet, daß bei Entnahme der Wegwerfeinheit die Dichtungen zwangsläufig mit entfernt werden. Der Gehäuse-Hauptteil ist mit einer äußeren becherförmigen Umfangswandung und einem konzentrisch dazu angeordneten inneren rohrförmigen Stutzen ausgebildet, wobei das Filtergehäuse mit seinem Stirnende in den Ringraum zwischen Umfangswandung und rohrförmigem Stutzen eingesteckt ist. Außen am Filtergehäuse ist hierzu eine Radialdichtung vorgesehen; innen am Filtergehäuse ist eine kombinierte Axial- und Radialdichtung angebracht. Hinsichtlich der Anbringung des Gehäuse-Hauptteils am Verbrennungsmotor ist auch hier lediglich eine ebenflächige Flanschverbindung offenbart, die in der einzigen Figur der Zeichnung links unten erkennbar ist. Demnach kann auch bei diesem bekannten Flüssigkeitsfilter die Verbindung mit dem Motorblock des zugehörigen Verbrennungsmotors lediglich unter Zwischenlage einer flächigen Dichtung mittels axialer Verspannung erfolgen. Zur Gewährleistung der Dichtigkeit der Flanschverbindung zwischen Filtergehäuse und Verbrennungsmotor im laufenden Betrieb über eine ausreichend lange Zeit muß auch hier das Material des Gehäuse-Hauptteils des Filters ausreichend stabil sein, was die Verwendung von Kunststoffen ausschließt.

Schließlich ist aus der US-A-3 746 171 eine Filteranordnung mit einem Filterkopf bekannt, in den ein Abschlußventil eingebaut ist und der zur Anbringung in einer Versorgungsleitung für zu filternde Flüssigkeit ausgelegt ist. Hierzu hat der Filterkopf einen Haltekragen, der das Filter mit dem Filterkopf verbindet. Weiterhin sind verstellbare Mittel vorgesehen, hier ein Hebel, die die Verbindung zwischen Filter und Filterkopf entweder fixieren oder zur Lösung freigeben. Allein der Filterkopf besteht schon aus mehreren miteinander verbundenen Einzelteilen. Bevorzugt ist dieser bekannte Filter für die Verwendung in Getränkeautomaten vorgesehen, z.B. Kaffeeautomaten, und dient dabei zur Filterung des für die Getränkeherstellung verwendeten Wassers. Die dem Gegenstand dieser Schrift zugrundeliegende Aufgabe besteht darin, eine Filtereinrichtung zu schaffen, die schnell und einfach und ohne Einsatz von Werkzeug insgesamt auswechselbar ist und bei der beim Abnehmen der Filtereinheit gleichzeitig die zugehörige Flüssigkeitsleitung abgesperrt wird. Diese Funktionen werden bei einem Filter für Öl oder Kraftstoff einer Brennkraftmaschine nicht benötigt; außerdem unterliegen Filter für Öl oder Kraftstoff einer Brennkraftmaschine mechanischen und thermischen Belastungen, die an einem Wasserfilter eines Getränkeautomaten bei weitem nicht auftreten.

Es stellt sich deshalb die Aufgabe, ein Flüssigkeitsfilter der eingangs genannten Art zu schaffen, das hinsichtlich der Auswahl der Materialien für seine Herstellung geringeren Einschränkungen unterliegt. Weiterhin sollen ein Flüssigkeitsfilter und ein dazu passender maschinenseitiger Filteranschlußflansch geschaffen werden, die eine einfache Montage des Flüssigkeitsfilters gewährleisten und die eine hohe Variabilität, d.h. insbesondere die Möglichkeit der Anbringung unterschiedlicher Flüssigkeitsfilter an einem gleichbleibenden Filteranschlußflansch, bieten.

Die Lösung dieser Aufgabe gelingt erfindungsgemäß durch ein Flüssigkeitsfilter und einen dazu passenden Filteranschlußflansch mit folgenden Merkmalen:
a) das Flüssigkeitsfilter umfaßt ein Filtergehäuse mit mindestens je einem Flüssigkeitszulaufkanal und Flüssigkeitsrücklaufkanal, einen das Filtergehäuse flüssigkeitsdicht verschließenden, lösbaren Deckel und einen aus dem Filtergehäuse entnehmbaren, einzeln austauschbaren Filtereinsatz,
b) der maschinenseitige Filteranschlußflansch weist mindestens einen Flüssigkeitszulauf für zu filternde Flüssigkeit, mindestens einen Flüssigkeitsrücklauf für gefilterte Flüssigkeit und mehrere mit am Filtergehäuse des Flüssigkeitsfilters vorgesehenen Dichtungen zusammenwirkende Dichtflächen auf,
c) die Dichtungen am Filtergehäuse sind zueinander konzentrische Radialdichtungen und die Dichtflächen am Filteranschlußflansch der Brennkraftmaschine sind zueinander konzentrische Radialdichtflächen,
d) der Flüssigkeitszulaufkanal und der Flüssigkeitsrücklaufkanal münden im Filtergehäuse in zwei getrennte flanschseitige, zueinander konzentrische Kanalendbereiche, wobei die Kanalendbereiche durch Wände mit zueinander konzentrischen Außenumfangsflächen begrenzt sind und wobei die Dichtungen in Nuten in den Außenumfangsflächen angeordnet sind,
e) das Filtergehäuse des Flüssigkeitsfilters ist unter Herstellung der erforderlichen Strömungsverbindungen an dem Filteranschlußflansch der Brennkraftmaschine anbringbar,
f) radial außerhalb der Kanalendbereiche mündet zusätzlich ein Flüssigkeitsablaßkanal für eine Entleerung des Filtergehäuses vor einem Filtereinsatzwechsel aus, der radial nach außen durch eine weitere Wand mit einer zu den Außenumfangsflächen konzentrischen Außenumfangsfläche begrenzt ist, wobei eine weitere Dichtung als Radialdichtring in eine Nut in der Auβenumfangsfläche eingelegt ist, wobei die Dichtung mit einer Dichtfläche des maschinenseitigen Filteranschlußflansches zusammenwirkt und wobei der Flüssigkeitsablaßkanal mit einem Ablaßkanal im Filteranschlußflansch korrespondiert,
g) die Mittelachse der zueinander konzentrischen Außenumfangsflächen und die Längsmittelachse des. Flüssigkeitsfilters bilden einen Winkel α ungleich 0° miteinander und
h) das Filtergehäuse ist ein einstückiges Spritzgußteil.

Durch diese Ausgestaltung des Flüssigkeitsfilters einerseits und des zugehörigen maschinenseitigen Filteranschlußflansches andererseits wird erreicht, daß die für die Herstellung einer axialen Abdichtung erforderlichen Andruckkräfte nicht mehr aufgebracht werden müssen. Hierdurch kann das Flüssigkeitsfilter auch aus weniger stabilem und leichterem Material, insbesondere Kunststoff, hergestellt werden, ohne daß die Betriebssicherheit des Flüssigkeitsfilters beeinträchtigt wird. Die Dichtwirkung der erfindungsgemäß vorgeschlagenen Radialdichtungen an den zugehörigen Radialdichtflächen tritt allein durch das Zusammenfügen von Flüssigkeitsfilter und maschinenseitigem Filteranschlußflansch ein, ohne daß spezielle Kräfte aufgebracht werden müssen. Hierdurch können die Befestigungsmittel, die das Flüssigkeitsfilter an dem Filteranschlußflansch halten, sehr einfach ausgeführt werden, da sie lediglich eine Bewegung des Flüssigkeitsfilters in Axialrichtung und Umfangsrichtung der Dichtflächen unterbinden müssen. Ein weiterer Vorteil liegt darin, daß der maschinenseitige Filteranschlußflansch relativ einfach herstellbar ist, weil alle Dichtflächen konzentrisch zueinander angeordnete Radialdichtflächen sind, die in einem einzigen Arbeitsgang mit einem rotierenden, spanabhebenden Werkzeug herstellbar sind. Weiterhin wird durch die Gestaltung der Dichtungen als Radialdichtringe, die in Nuten in den Außenumfangsflächen angeordnet sind, für eine einfache Herstellbarkeit und Montage gesorgt, da die Dichtringe einfach anbringbar sind und bei der Montage des Flüssigkeitsfilters an dem zugehörigen Filteranschlußflansch von außen sichtbar sind, so daß Montagefehler weitgehend vermieden werden. Weiter ist das Filter vorteilhaft so gestaltet, daß man bei einem Wechsel des Filtereinsatzes diesen aus Umweltschutzgründen weitestgehend flüssigkeitsfrei aus dem Flüssigkeitsfilter entnehmen kann. Außerdem kann aufgrund des oben angegebenen Merkmals g) vorteilhaft das Flüssigkeitsfilter durch Verdrehen relativ zum Filteranschlußflansch in eine gewünschte Position gebracht werden, in der beispielsweise eine selbsttätige Entleerung des Filtergehäuses bei einem Wechsel des Filtereinsatzes ermöglicht wird und/oder in der ein vorgegebener Einbauraum, z.B. im Motorraum eines Kraftfahrzeuges, optimal genutzt wird. Der Filteranschlußflansch kann universell verwendet werden, da er unabhängig von der Größe des daran angeflanschten Flüssigkeitsfilters für verschiedene Filterausführungen verwendbar ist. Insgesamt lassen sich mit der Erfindung Material-, Gewichts- und Kosteneinsparungen erreichen.

Um das Filtergehäuse des Flüssigkeitsfilters möglichst einfach und damit zeit- und kostensparend herstellen zu können, wird vorgeschlagen, daß die Dichtungen am Filtergehäuse in Axialrichtung gesehen voneinander beabstandet angeordnet sind, wobei von radial außen nach innen betrachtet die Dichtungen jeweils in Richtung zum Filteranschlußflansch vorspringen und wobei die damit korrespondierenden Dichtflächen im Filteranschlußflansch entsprechend gestuft angeordnet sind. Das Maß der Beabstandung bzw. Abstufung wird dabei zweckmäßig so gewählt, daß die Nuten in Radialrichtung nach außen jeweils frei zugänglich sind. Hierdurch wird ein einfacher Zugang zur Anbringung der Dichtringe gewährleistet. Außerdem ist ein Zuführen von Werkzeugen oder eine Entformung des Filtergehäuses bei seiner Herstellung hierdurch sehr vereinfacht.

Hinsichtlich des oben im Merkmal g) erwähnten Winkels α ist bevorzugt vorgesehen, daß dieser Winkel α bis zu 45° beträgt. Ein solcher Winkelbereich dürfte in der Praxis zur Abdeckung aller Einbausituationen des Filters ausreichend sein.

In einer alternative Ausgestaltung des Filters ist statt des Merkmals g) des Anspruchs 1 vorgesehen, daß die Mittelachse der zueinander konzentrischen Außenumfangsflächen und die Längsmittelachse des Flüssigkeitsfilters parallel zueinander mit einem Versatz verlaufen. Auch bei dieser Ausgestaltung besteht die Möglichkeit, die Lage des Flüssigkeitsfilters relativ zum maschinenseitigen Filteranschlußflansch durch Verdrehen zu verändern, um z.B. eine optimale Position in Abhängigkeit von der jeweiligen Einbausituation zu erreichen.

Für Anwendungsfälle des Flüssigkeitsfilters, in denen dieses mit einer annähernd waagerechten oder nach unten oder schräg nach unten weisenden Längsmittelachse eingebaut wird, ist vorgesehen, daß das Flüssigkeitsfilter in seiner Umfangswand oder in seinem Deckel eine im Betrieb verschlossene, wahlweise freigebbare Flüssigkeitsablaßöffnung aufweist. Diese Ausgestaltung des Flüssigkeitsfilters ermöglicht eine Entleerung des Inneren des Filtergehäuses vor einem Filtereinsatzwechsel, um auch bei einer solchen Anordnung, die eine Entleerung über einen Flüssigkeitsablaßkanal in dem Filteranschlußflansch nicht ermöglicht, den Filtereinsatz möglichst flüssigkeitsfrei aus dem Filtergehäuse entnehmen und entsorgen zu können.

Im einfachsten Fall ist die Flüssigkeitsablaßöffnung durch eine Gewindebohrung gebildet, die im Betrieb des Flüssigkeitsfilters mit einer Schraube nebst Dichtung verschlossen ist. Vor einem Wechsel des Filtereinsatzes kann dann durch Herausdrehen der Schraube die Flüssigkeitsablaßöffnung geöffnet und die Flüssigkeit aus dem Inneren des Flüssigkeitsfilters abgelassen werden. Alternativ kann an die Flüssigkeitsablaßöffnung außen auch eine Flüssigkeitsleitung angeschlossen sein, die in einen Flüssigkeitsvorratsbehälter führt, wozu dann an der Flüssigkeitsablaßöffnung ein von außen zugängliches Verschlußmittel, z.B. ein kleines Absperrventil, vorzusehen ist.

Eine Weiterbildung von Flüssigkeitsfilter und Filteranschlußflansch sieht am Außenumfang des Filtergehäuses angebrachte oder angreifende Arretierungsmittel vor, mit denen das Filtergehäuse zur Unterbindung von Bewegungen in Axial- und Umfangsrichtung des Filteranschlußflansches an diesem oder relativ zu diesem festlegbar ist. Hierdurch sind die Arretierungsmittel von außen her zugänglich, wodurch deren Betätigung und Handhabung vereinfacht wird. Außerdem kann so das Flüssigkeitsfilter komplett, d.h. in seinem geschlossenen Zustand mit aufgesetztem Deckel montiert werden, was Beschädigungen und Verunreinigungen des Filterinneren verhindert und die Montage beschleunigt.

Um die weiter oben beschriebene variable Positionierbarkeit des Flüssigkeitsfilters in Umfangsrichtung relativ zum Filteranschlußflansch durch die Arretierungsmittel nicht einzuschränken, ist vorgesehen, daß das Filtergehäuse mittels der Arretierungsmittel in Umfangsrichtung gesehen in mehreren Winkelstellungen relativ zum Filteranschlußflansch an diesem festlegbar ist. Geeignete Arretierungsmittel, die einfach aufgebaut und einfach zu betätigen sind, stehen dem Fachmann aus anderen Anwendungsgebieten zur Verfügung und müssen deshalb hier nicht mehr erläutert werden.

Zur Ermöglichung einer kostengünstigen Massenfertigung als Öl- oder Kraftstoffilter für Kraftfahrzeug-Brennkraftmaschinen, ist bevorzugt vorgesehen, daß das Spritzgußteil, das das Filtergehäuse bildet, aus Metall oder Kunststoff besteht und daß auch der Deckel ein Spritzgußteil aus Metall oder Kunststoff ist.

Bei Bedarf kann das Flüssigkeitsfilter gemäß Erfindung mit einem Wärmetauscher kombiniert werden, wie dies an sich bekannt ist. Der Wärmetauscher kann dabei wahlweise seitlich am Flüssigkeitsfilter angeordnet oder zwischen dem Filteranschlußflansch und dem Flüssigkeitsfilter eingeschaltet sein. Dabei besteht auch die Möglichkeit, den zwischen Filteranschlußflansch und Flüssigkeitsfilter eingeschalteten Wärmetauscher gleichzeitig als Winkeladapter auszugestalten. Alternativ kann man auch einen reinen Winkeladapter zwischen dem Filteranschlußflansch und dem Flüssigkeitsfilter anordnen. Die Anschlußenden des Wärmetauschers und/oder Winkeladapters sind dabei zweckmäßig entsprechend dem Filteranschlußflansch und dem Anschlußende des Flüssigkeitsfilters gestaltet, um eine universelle Verwendung und einen Einsatz entsprechend einem Baukastensystem zu ermöglichen.

Ein Ausführungsbeispiel der Erfindung wird in folgenden anhand einer Zeichnung erläutert. Die Figuren der Zeichnungen zeigen:
- Figur 1: ein Flüssigkeitsfilter, das an einem zugehörigen maschinenseitigen Filteranschlußflansch montiert ist, in einem ersten Längsschnitt,
- Figur 2: das Flüssigkeitsfilter aus Figur 1 in einem zweiten Längsschnitt,
- Figur 3: einen Blick in das Flüssigkeitsfilter bei abgenommenem Deckel und entferntem Filtereinsatz und Stützkörper und
- Figur 4: den Filteranschlußflansch in einem Querschnitt entlang der Linie IV-IV in Figur 1.

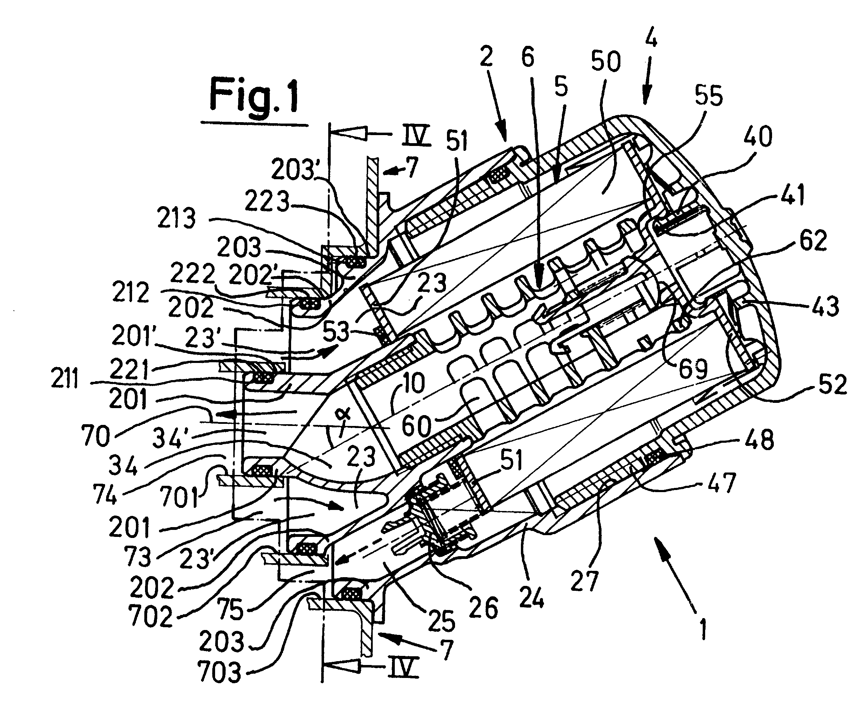

Figur 1 der Zeichnung zeigt als Ausführungsbeispiel eines Flüssigkeitsfilters 1 eine Ausführung für einen Einbau mit einer schräg nach oben verlaufenden Filter-Längsachse 10. Das Flüssigkeitsfilter 1 besitzt ein im wesentlichen becherförmiges Filtergehäuse 2, das durch eine Umfangswand 24 und mehrere einen Anschlußteil bildende Wände 201, 202, 203 gebildet ist. Das Material des Filtergehäuses 2 ist vorzugsweise Leichtmetall oder Kunststoff und die Herstellung erfolgt bevorzugt als Druck- bzw. Spritzgußteil.

Die Wände 201, 202, 203 besitzen stirnseitig jeweils zylindrische, konzentrisch zueinander verlaufende Außenumfangsflächen 201', 202', 203'. Von der in Radialrichtung betrachtet inneren Wand 201 wird ein Rücklaufkanal-Endbereich 34' umgrenzt; von der in Radialrichtung betrachtet mittleren Wand 202 wird ein Zulaufkanal-Endbereich 23' umgrenzt. Die Wand 203, die in Radialrichtung betrachtet ganz außen liegt, begrenzt einen Ablaßkanal 25, der sich lediglich durch den im Einbauzustand des Flüssigkeitsfilters tiefsten Bereich des Filtergehäuses 2 erstreckt.

Weiterhin zeigt die Figur 1, daB jeweils in die Außenumfangsfläche 201', 202', 203' eine umlaufende Nut 211, 212, 213 eingetieft ist, in die je ein Dichtring 221, 222, 223 als Radialdichtring eingelegt ist. Die Wände 201 bis 203 und die zugehörigen Radialdichtungen 221 bis 223 sind dabei so angeordnet, daß sie in Axialrichtung entlang der Mittelachse 70 betrachtet in unterschiedlichen Ebenen liegen. Dabei springen die Stirnenden der Wände 201 bis 203 von innen nach außen betrachtet jeweils zurück.

Im linken Teil der Figur 1 ist ein Filteranschlußflansch 7 im Schnitt erkennbar, der beispielsweise Teil eines Motorblocks einer Brennkraftmaschine ist. Im zentralen Bereich des Filteranschlußflansches 7 liegt ein Rücklaufkanal 74, der mit dem Rücklaufkanal-Endbereich 34' des Flüssigkeitsfilters 1 in Strömungsverbindung steht. Nach außen hin wird der Rücklaufkanal 74 im Filteranschlußflansch 7 durch eine zylindrische Dichtfläche 701 begrenzt, die mit der Dichtung 221 dichtend zusammenwirkt. In Radialrichtung nach außen hin schließt sich an den Rücklaufkanal 74 ein dazu konzentrischer Zulaufkanal 73 an, der radial nach außen ebenfalls durch eine zylindrische Dichtfläche 702 begrenzt ist, die mit der Dichtung 222 zusammenwirkt. Dieser Zulaufkanal 73 steht in Strömungsverbindung mit dem Zulaufkanal-Endbereich 23' des Flüssigkeitsfilters 1. Schließlich befindet sich im unteren Teil des Filteranschlußflansches 7 noch ein Ablaßkanal 75, der mit dem Ablaßkanal 25 im Flüssigkeitsfilter 1 in Strömungsverbindung steht. Auch hier erfolgt die Abdichtung durch ein Zusammenwirken einer zylindrischen Dichtfläche 703 mit der Dichtung 223 an der Wand 203 des Filtergehäuses 2.

An seiner nach rechts oben weisenden Seite ist das Filtergehäuse 2 offen ausgebildet und besitzt an der Innenseite seiner Umfangswand 24 ein Innengewinde 27. In dieses Innengewinde 27 ist ein unterseitig mit Rippen 43 versehener Deckel 4 mittels eines passenden Außengewindes 47 unter Zwischenlage eines weiteren Dichtringes 48 dichtend eingeschraubt.

Im Inneren des Flüssigkeitsfilters 1 ist weiterhin ein Filtereinsatz 5 angeordnet, der hier aus einem zickzackförmig gefalteten Filterstoffkörper 50 besteht, der unten und oben mit je einer Stirnscheibe 51, 52 flüssigkeitsdicht verbunden, beispielsweise verklebt oder verschweißt oder vergossen ist. Beide Stirnscheiben 51, 52 sind kreisringförmig ausgebildet. Die untere Stirnscheibe 51 trägt an ihrer radial inneren Kante eine Dichtung 53, mit der die Stirnscheibe 51 dichtend auf einen Aufnahmestutzen im Filtergehäuse 2 aufgesteckt ist.

Die obere Stirnscheibe 52 des Filtereinsatzes 5 ist mit zum Deckel 4 hin liegenden Rastaufnahmen 55 versehen, die mit Rastnasen 41, welche an Rastzungen 40 des Deckels 4 angebracht sind, zusammenwirken. Hierdurch ist eine rastende Verbindung zwischen dem Filtereinsatz 5 und dem Deckel 4 hergestellt, die bei einem Abnehmen des Deckels 4 für eine Mitnahme des Filtereinsatzes 5 aus dem Filtergehäuse 2 sorgt und die bei Bedarf, insbesondere bei einem Wechsel des Filtereinsatzes 5, leicht lösbar ist.

Im Inneren des Filterkörpers 5 ist ein zentraler Stützkörper 6 angeordnet, der eine im wesentlichen hohlzylindrische, gitterartige Struktur besitzt und zur Abstützung des Innenumfangs des Filterstoffkörpers 50 dient, um ein Kollabieren unter dem Druck der den Filtereinsatz 5 von außen nach innen durchströmenden Flüssigkeit zu vermeiden. Die Durchbrechungen 60 im Stützkörper 6 ermöglichen einen unbehinderten Flüssigkeitsdurchtritt in dessen Inneres. Mit seinem unteren Ende ist der Stützkörper 6 mittels entsprechender Gewinde in das Innere des zentral im Filtergehäuse 2 liegenden Stutzens eingeschraubt.

Im Inneren des Stützkörpers 6 ist an dessen oberem Ende 62 ein Bypass-Ventil 69 eingebaut, das eine unmittelbare Strömungsverbindung zwischen der Zulauf- oder Rohseite und der Rücklauf- oder Reinseite des Flüssigkeitsfilters 1 freigibt, wenn der Druckabfall über dem Filtereinsatz 5 einen Grenzwert überschreitet. Das Bypass-Ventil 69 ist als vorgefertigtes Bauteil vom freien Ende des Stützkörpers 6 her in diesen eingesetzt und dort verrastet. Der Ventilsitz, mit dem das Bypass-Ventil 69 zusammenwirkt, ist als Teil der oberen Stirnscheibe 52 in deren zentralem Bereich ausgebildet.

Im unteren Teil der Figur 1 ist innerhalb des Filtergehäuses 2 schließlich noch ein Ablaßventil 26 erkennbar, welches im dargestellten Zustand des Flüssigkeitsfilters 1 mit einem eingesetzten Filtereinsatz 5 von dessen unterer Stirnscheibe 51 in Schließstellung gehalten wird. Bei einem Abschrauben des Deckels 4 und einem damit verbundenen Herausziehen des Filtereinsatzes 5 aus dem Filtergehäuse 2 wird das Ablaßventil 26 mittels einer Schraubenfeder selbstätig in seine Öffnungsstellung bewegt, wodurch eine Strömungsverbindung zum Ablaßkanal 25 freigegeben wird. Durch den Ablaßkanal 25, der im Filteranschlußflansch 7 in Fortsetzung des Ablaßkanals 25 liegt, gelangt so die Flüssigkeit aus dem Inneren des Filtergehäuses 2 heraus und in einen Vorratsbehälter, z.B. die Ölwanne oder den Kraftstofftank eines Kraftfahrzeuges.

Wie aus Figur 1 ersichtlich ist, liegt der Filteranschlußflansch 7 in einer im wesentlichen vertikalen Ebene. Um eine vollständige Entleerung des Filtergehäuses 2 vor einem Wechsel des Filtereinsatzes 5 zu gewährleisten, ist es sinnvoll, daß die Längsachse 10 des Flüssigkeitsfilters 1 schräg nach oben weisend verläuft. Hierdurch bilden diese Längsmittelachse 10 und die Mittelachse 70 der konzentrischen Außenumfangsflächen 201' bis 203' miteinander einen Winkel α. Dieser Winkel α beträgt im dargestellten Ausführungsbeispiel etwa 30° ; in der Praxis kann der Winkel a auch wesentlich größere Werte haben, entsprechend der jeweiligen Einbausituation.

Bei der Montage des Flüssigkeitsfilters 1 am Filteranschlußflansch 7 genügt es, das Flüssigkeitsfilter 1 in Richtung der Achse 70 in den Filteranschlußflansch 7 hineinzubewegen und dann nach Verdrehung in Umfangsrichtung in die gewünschte Position mittels geeigneter Arretierungsmittel, die hier nicht dargestellt sind, festzulegen.

Im Betrieb des Flüssigkeitsfilters 1 strömt zu filternde Flüssigkeit durch den Zulaufkanal 73 des Filteranschlußflansches 7, den Zulaufkanal-Endbereich 23' und einen Zulaufkanal 23 des Filtergehäuses 2 zum Außenumfang des Filtereinsatzes 5. Nach Durchtritt der Flüssigkeit durch den Filterstoffkörper 50 unter Abscheidung von Verunreinigungen gelangt die Flüssigkeit in das Innere des Stützkörpers 60 und strömt in diesem nach links unten in einen Rücklaufkanal 34 und dann über dessen Endbereich 34' in den Rücklaufkanal 74 des Filteranschlußflansches 7.

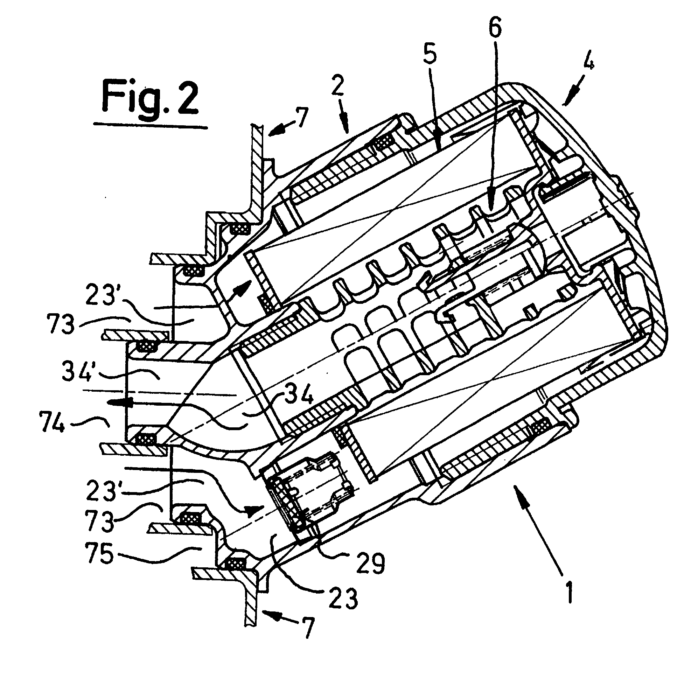

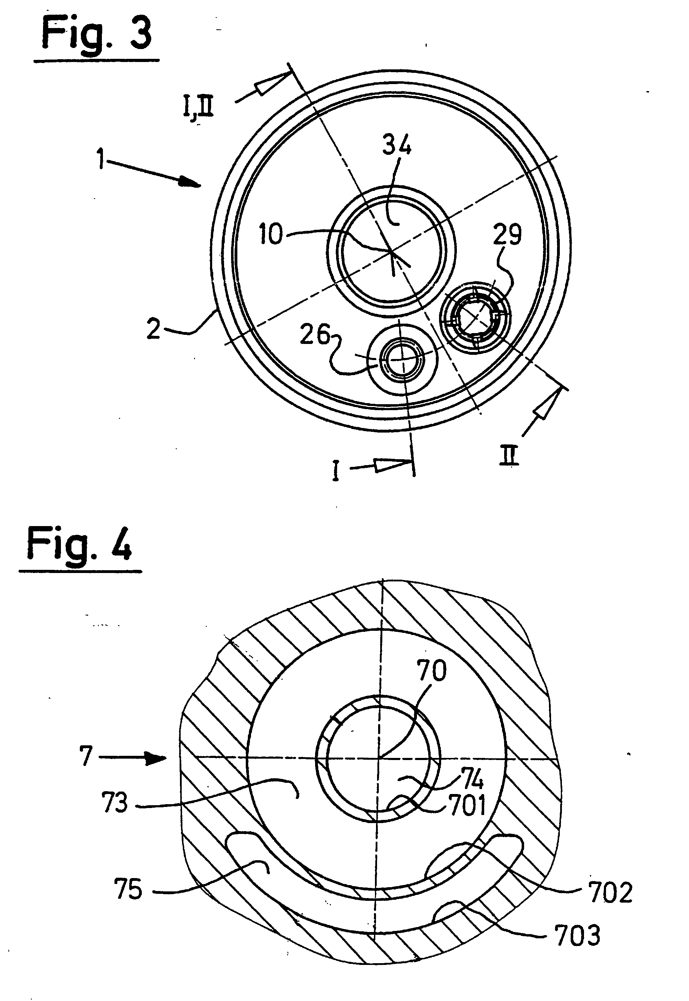

Figur 2 der Zeichnung zeigt dasselbe Flüssigkeitsfilter 1 wie die Figur 1, nun aber mit einem geänderten Verlauf des Schnittes. Zum Verlauf der Schnitte, die in Figur 1 und 2 dargestellt sind, wird auf die Figur 3 verwiesen, in der mit der Linie I-I der Verlauf des Schnittes in Figur 1 und mit der Linie II-II der Verlauf des Schnittes in Figur 2 dargestellt ist.

Auch in Figur 2 ist demnach das Flüssigkeitsfilter 1 in den Filteranschlußflansch 7 eingesteckt, wobei hinsichtlich der Bezugsziffern auf die Beschreibung zur Figur 1 verwiesen wird.

Neu gegenüber der Figur 1 ist in Figur 2 das nun im unteren Teil der Darstellung sichtbare Rücklaufsperrventil 29, das im Verlauf des Zulaufkanals 23 zwischen dessen Endbereich 23' und dem Außenumfang des Filtereinsatzes 5 angeordnet ist. Dieses Rücklaufsperrventil 29 öffnet sich unter dem Druck der durch den Kanal 23 zuströmenden zu reinigenden Flüssigkeit; eine Strömung in die umgekehrte Richtung wird durch das Rücklaufsperrventil 29 unterbunden.

Figur 3 der Zeichnung zeigt die relative Positionierung von Rücklaufsperrventil 29 und Ablaßventil 26 im Inneren des Filtergehäuses 2 des Flüssigkeitsfilters 1. Hier wird besonders deutlich, daß das Ablaßventil 26 im wesentlichen an der im Einbauzustand des Flüssigkeitsfilters 1 tiefsten Stelle des Filtergehäuses 2 liegt.

Im Mittelpunkt der Figur 3 verläuft die Längsmittelachse 10 des Flüssigkeitsfilters 1; konzentrisch um diese herum liegt der Rücklaufkanal 34. Außen um den Rücklaufkanal 34 herum befindet sich der Raum zur Aufnahme des Filtereinsatzes 5; oberhalb des Rücklaufkanals 34 wird der zentrale Stützkörper 6 angeordnet. Diese Teile sowie der Deckel 4 sind bei der Darstellung gemäß Figur 3 entfernt, so daß der Blick bis zum Boden des Filtergehäuses 2 in dieses hineingeht.

Figur 4 der Zeichnung schließlich zeigt einen Schnitt entlang der Linie IV-IV in Figur 1 durch den maschinenseitigen Filteranschlußflansch 7. Durch den Mittelpunkt der Figur 4 verläuft die Mittelachse 70 der zueinander konzentrischen Dichtflächen 701 und 702. Im zentralen Bereich des Filteranschlußflansches 7 liegt der Flüssigkeitsrücklauf 74, beim vorliegenden Beispiel ein Ölrücklauf. Radial nach außen schließt sich daran in konzentrischer Anordnung der Flüssigkeitszulauf 73, in vorliegenden Beispiel ein Ölzulauf, an. Dieser wird nach außen hin durch die zu der Dichtfläche 701 konzentrische, ebenfalls zylindrische Dichtfläche 702 begrenzt.

Unterhalb des Flüssigkeitszulaufs 73 befindet sich noch der Flüssigkeitsablaßkanal 75, der hier die Form eines Kreisringabschnittes besitzt. Radial nach außen wird der Flüssigkeitsablaßkanal 75 durch eine ebenfalls konzentrisch zu den Dichtflächen 701, 702 verlaufende Dichtfläche 703 begrenzt. Da für den Flüssigkeitsablaß aus dem Flüssigkeitsfilter eine räumlich möglichst tiefe Lage des Ablaßkanals 75 relativ zum Filtergehäuse 2 erforderlich ist, genügt es, wenn der Flüssigkeitsablaßkanal 75 im Filteranschlußflansch 7 lediglich in dessen unterem Bereich vorgesehen ist, wie dies die Figur 4 zeigt. Zur Ermöglichung einer dichtenden Anlage der radial äußeren Dichtung 223 des Flüssigkeitsfilters 1 ist es aber erforderlich, daß sich die Dichtfläche 703 in einer oberhalb der Zeichnungsebene von Figur 4 liegenden Ebene über den gesamten Umfang erstreckt, wie dies aus den Figuren 1 und 2 jeweils oben links erkennbar ist.

## Patentansprüche

1. Flüssigkeitsfilter für Öl oder Kraftstoff einer Brennkraftmaschine und dazu passender, einen Teil der Brennkraftmaschine bildender Filteranschlußflansch (7), mit folgenden Merkmalen:
a) das Flüssigkeitsfilter (1) umfaßt ein Filtergehäuse (2) mit mindestens je einem Flüssigkeitszulaufkanal (23) und Flüssigkeitsrücklaufkanal (34), einen das Filtergehäuse (2) flüssigkeitsdicht verschließenden, lösbaren Deckel (4) und einen aus dem Filtergehäuse (2) entnehmbaren, einzeln austauschbaren Filtereinsatz (5),
b) der maschinenseitige Filteranschlußflansch (7) weist mindestens einen Flüssigkeitszulauf (73) für zu filternde Flüssigkeit, mindestens einen Flüssigkeitsrücklauf (74) für gefilterte Flüssigkeit und mehrere mit am Filtergehäuse (2) des Flüssigkeitsfilters (1) vorgesehenen Dichtungen (221, 222, 223) zusammenwirkende Dichtflächen (701, 702, 703) auf,
c) die Dichtungen (221, 222, 223) am Filtergehäuse (2) sind zueinander konzentrische Radialdichtungen und die Dichtflächen (701, 702, 703) am Filteranschlußflansch (7) der Brennkraftmaschine sind zueinander konzentrische Radialdichtflächen,
d) der Flüssigkeitszulaufkanal (23) und der Flüssigkeitsrücklaufkanal (34) münden im Filtergehäuse (2) in zwei getrennte flanschseitige, zueinander konzentrische Kanalendbereiche (23', 34'), wobei die Kanalendbereiche (23', 34') durch Wände (201, 202) mit zueinander konzentrischen Außenumfangsflächen (201', 202') begrenzt sind und wobei die Dichtungen (221, 222) in Nuten (211, 212) in den Außenumfangsflächen (201', 202') angeordnet sind,
e) das Filtergehäuse (2) des Flüssigkeitsfilters (1) ist unter Herstellung der erforderlichen Strömungsverbindungen an dem Filteranschlußflansch (7) der Brennkraftmaschine anbringbar,
f) radial außerhalb der Kanalendbereiche (23', 34') mündet zusätzlich ein Flüssigkeitsablaßkanal (25) für eine Entleerung des Filtergehäuses (2) vor einem Filtereinsatzwechsel aus, der radial nach außen durch eine weitere Wand (203) mit einer zu den Außenumfangsflächen (201', 202') konzentrischen Außenumfangsfläche (203') begrenzt ist, wobei eine weitere Dichtung (223) als Radialdichtring in eine Nut (213) in der Außenumfangsfläche (203') eingelegt ist, wobei die Dichtung (223) mit einer Dichtfläche (703) des maschinenseitigen Filteranschlußflansches (7) zusammenwirkt und wobei der Flüssigkeitsablaßkanal (25) mit einem Ablaßkanal (75) im Filteranschlußflansch (7) korrespondiert,
g) die Mittelachse (70) der zueinander konzentrischen Außenumfangsflächen (201', 202', 203') und die Längsmittelachse (10) des Flüssigkeitsfilters (1) bilden einen Winkel α ungleich 0° miteinander und
h) das Filtergehäuse (2) ist ein einstückiges Spritzgußteil.

2. Flüssigkeitsfilter und Filteranschlußflansch nach Anspruch 1, **dadurch gekennzeichnet, daß** die Dichtungen (221, 222, 223) am Filtergehäuse (2) in Axialrichtung gesehen voneinander beabstandet angeordnet sind, wobei von radial außen nach innen betrachtet die Dichtungen (223, 222, 221) jeweils in Richtung zum Filteranschlußflansch (7) vorspringen und wobei die damit korrespondierenden Dichtflächen (703, 702, 701) im maschinenseitigen Filteranschlußflansch (7) entsprechend gestuft angeordnet sind.

3. Flüssigkeitsfilter und Filteranschlußflansch nach An spruch 1 oder 2, **dadurch gekennzeichnet, daß** der Winkel α bis zu 45° beträgt.

4. Flüssigkeitsfilter und Filteranschlußflansch nach Anspruch 1 oder 2, **dadurch gekennzeichnet, daß** statt des Merkmals g) des Anspruchs 1 vorgesehen ist, daß die Mittelachse (70) der zueinander konzentrischen Außenumfangsflächen (201', 202', 203') und die Längsmittelachse (10) des Flüssigkeitsfilters (1) parallel zueinander mit einem Versatz verlaufen.

5. Flüssigkeitsfilter und Filteranschlußflansch nach einem der Ansprüche 1 bis 4, **dadurch gekennzeichnet, daß** das Flüssigkeitsfilter (1) in seiner Umfangswand (24) oder in seinem Deckel (4) eine im Betrieb verschlossene, wahlweise freigebbare Flüssigkeitsablaßöffnung aufweist.

6. Flüssigkeitsfilter und Filteranschlußflansch nach einem der vorangehenden Ansprüche, **gekennzeichnet durch** am Außenumfang des Filtergehäuses (2) angebrachte oder angreifende Arretierungsmittel, mit denen das Filtergehäuse (2) zur Unterbindung von Bewegungen in Axial- und Umfangsrichtung des Filteranschlußflansches (7) an diesem festlegbar ist.

7. Flüssigkeitsfilter und Filteranschlußflansch nach Anspruch 6, **dadurch gekennzeichnet, daß** das Filtergehäuse (2) mittels der Arretierungsmittel in Umfangsrichtung gesehen in mehreren Winkelstellungen relativ zum. Filteranschlußflansch (7) an diesem festlegbar ist.

8. Flüssigkeitsfilter und Filteranschlußflansch nach einem der vorangehenden Ansprüche, **dadurch gekennzeichnet, daß** das Spritzgußteil, das das Filtergehäuse (2) bildet, aus Metall oder Kunststoff besteht und daß auch der Deckel (4) ein Spritzgußteil aus Metall oder Kunststoff ist.

## Claims

1. Liquid filter for oil or fuel in an internal combustion engine and a filter connecting flange (7) which fits this filter and forms part of the internal combustion engine, with the following characteristics:
a) the liquid filter (1) comprises a filter housing (2) with at least one liquid inlet channel (23) and a liquid return channel (34), a cover (4) that can provide a liquid tight seal for the filter housing (2) and which is removable, and a filter insert (5) that can be removed from the filter housing (2) and can be replaced,
b) the filter connection flange (7) on the engine side has at least one liquid inlet (73) for liquid that needs to be filtered, at least one liquid return (74) for filtered liquid and several seal faces (701, 702, 703) that function together with seals (221, 222, 223) that are fitted on the filter housing (2) of the liquid filter (1),
c) the seals (221, 222, 223) on the filter housing (2) are concentric radial seals and the seal faces (701, 702, 703) on the filter connecting flange (7) of the internal combustion machine are concentric radial seal faces,
d) the liquid inlet channel (23) and the liquid return channel (34) end in the filter housing (2) in two separate concentric channel end areas (23', 34') on the flange side, where the channel end areas (23', 34') are defined by walls (201, 202) with concentric external circumferential faces (201', 202'), and where the seals (221, 222) are fitted into grooves (211, 212) in the external circumferential faces (201', 202'),
e) the filter housing (2) of the liquid filter (1) can be attached to the filter connecting flange (7) of the internal combustion machine under completion of the necessary flow connections,
f) radially outside the channel end areas (23', 34') a liquid outlet channel (25) ends in order to empty the filter housing (2) before changing the filter insert, which channel (25) is defined radially to the outside by a further wall (203) with an external circumferential face (203') that is concentric with the outer circumferential faces (201', 202'), where a further seal (223) is embedded in a groove (213) as a radial seal in the external circumferential face (203'), where the seal (223) functions together with a seal face (703) of the filter connecting flange (7) on the engine side, and where the liquid outlet channel (25) corresponds to an outlet channel (75) in the filter connecting flange (7),
g) the central axis (70) of the concentric external circumferential faces (201', 202', 203') and the longitudinal central axis (10) of the liquid filter (1) form an angle α with each other that is not equal to 0° and
h) the filter housing (2) is a one-piece injection moulded part.

2. Liquid filter and filter connecting flange according to Claim 1, **characterised in that** the seals (221, 222, 223) on the filter housing (2) are fitted with axial distance from each other, where looking radially from outside to inside, the seals (223, 222, 221) in each case protrude in the direction to the filter connecting flange (7), and where the corresponding seal faces (703, 702, 701) are arranged accordingly stepped in the filter connecting flange (7) on the engine side.

3. Liquid filter and filter connecting flange according to Claim 1 or 2, **characterised in that** the angle α can be up to 45°.

4. Liquid filter and filter connecting flange according to Claim 1 or 2, **characterised in that** instead of characteristic g) in Claim 1, the design is such that the central axis (70) of the concentric external circumferential faces (201', 202', 203') and the longitudinal central axis (10) of the liquid filter (1) run parallel to each other in a staggered way.

5. Liquid filter and filter connecting flange according to one of the Claims 1 to 4, **characterised in that** the liquid filter (1) has a sealed liquid outlet opening in its circumferential wall (24) or in its cover (4) that is closed during operation and that may be opened if necessary.

6. Liquid filter and filter connecting flange according to one of the above Claims, **characterised by** locking means that are attached to or which lock onto the external circumference of the filter housing (2), by means of which means the filter housing (2) can be fixed to the filter connecting flange (7) in order to prevent movement in the axial and circumferential direction of the latter.

7. Liquid filter and filter connecting flange according to Claim 6, **characterised in that** the filter housing (2) in terms of the circumferential direction can be fixed to the filter connecting flange (7) in several angular positions relative to this flange by the locking means.

8. Liquid filter and filter connecting flange according to one of the above Claims, **characterised in that** the injection moulded part that forms the filter housing (2) is made of metal or plastic and that the cover (4), too, is an injection moulded part made of metal or plastic.

## Revendications

1. Filtre à liquides pour l'huile ou le carburant d'un moteur à combustion interne et bride de raccordement de filtre (7) adaptée à ce dernier et constituant une partie du moteur à combustion interne, qui présentent les caractéristiques suivantes :
a) le filtre à liquides (1) comprend un boîtier de filtre (2), qui comporte au moins, à chaque fois, un canal d'amenée de liquide (23) et un canal de retour du liquide (34), un couvercle (4) amovible qui obture le boîtier de filtre (2) de manière étanche aux liquides, et une cartouche de filtre (5) qui peut être enlevée du boîtier de filtre (2) et être échangée séparément,
b) la bride de raccordement de filtre (7), qui est disposée du côté du moteur, comporte au moins un dispositif d'amenée de liquides (73) pour le liquide à filtrer, au moins un dispositif de retour de liquide (74) pour le liquide filtré et plusieurs surfaces d'étanchéité (701, 702, 703) qui coopèrent avec des dispositifs d'étanchéité (221, 222, 223) qui sont prévus sur le boîtier de filtre (2) du filtre à liquides (1),
c) les dispositifs d'étanchéité (221, 222, 223), qui sont disposés sur le boîtier de filtre (2), sont des dispositifs d'étanchéité radiaux disposés concentriquement les uns aux autres et les surfaces d'étanchéité (701, 702, 703), qui sont disposées sur la bride de raccordement de filtre (7) du moteur à combustion interne sont des surfaces d'étanchéité radiales disposées concentriquement les unes aux autres,
d) le canal d'amenée de liquide (23) et le canal de retour du liquide (34) débouchent dans le boîtier de filtre (2) dans deux zones d'extrémité de canal (23', 34') séparées qui sont disposées du côté de la bride, concentriquement les unes aux autres, les zones d'extrémité de canal (23', 34') étant limitées par des parois (201, 202) qui comportent des surfaces périphériques extérieures (201', 202') qui sont disposées concentriquement les unes aux autres et les dispositifs d'étanchéité (221, 222) étant disposés dans des encoches (211, 212) ménagées dans les surfaces périphériques extérieures (201', 202').
e) le boîtier de filtre (2) du filtre à liquides (1) peut être mis en place sur la bride de raccordement de filtre (7) du moteur à combustion interne, lors de la fabrication des liaisons fluidiques nécessaires,
f) un canal d'évacuation du liquide (25) débouche, de manière complémentaire, radialement à l'extérieur des zones d'extrémité de canal (23', 34'), ledit canal d'évacuation du liquide (25) étant destiné à une vidange du boîtier de filtre (2) avant un changement de la cartouche de filtre et étant limité, en direction radiale vers l'extérieur, par une autre paroi (203) qui comporte une surface périphérique extérieure (203') qui est disposée concentriquement aux surfaces périphériques extérieures (201', 202'), un autre dispositif d'étanchéité (223), qui est réalisé sous la forme d'un anneau radial d'étanchéité, est placé dans une encoche (213) ménagée dans la surface périphérique extérieure (203'), le dispositif d'étanchéité (223) coopérant avec une surface d'étanchéité (703) de la bride de raccordement de filtre (7), qui est disposée du côté du moteur, et le canal d'évacuation du liquide (25) correspondant avec un canal d'évacuation (75) ménagé dans la bride de raccordement de filtre (7),
g) l'axe central (70) des surfaces périphériques extérieures (201', 202', 203'), qui sont disposées concentriquement les unes aux autres, et l'axe central longitudinal (10) du filtre à liquides (1) forment entre eux un angle α qui est différent de 0 ° et
h) le boîtier de filtre (2) est constitué par une seule pièce moulée par injection.

2. Filtre à liquides et bride de raccordement de filtre selon la revendication 1, **caractérisés en ce que** les dispositifs d'étanchéité (221, 222, 223) sont disposées sur le boîtier de filtre (2) en étant à distance les unes des autres selon la direction longitudinale, les dispositifs d'étanchéité (221, 222, 223) faisant saillie chacun, en regardant radialement de l'extérieur vers l'intérieur, dans la direction du la bride de raccordement de filtre (7) et les surfaces d'étanchéité (703, 702, 701) qui leur correspondent étant disposées en gradins de manière correspondante dans la bride de raccordement de filtre (7) qui est disposée du côté du moteur.

3. Filtre à liquides et bride de raccordement de filtre selon la revendication 1 ou 2, **caractérisés en ce que** l'angle α a une valeur allant jusqu'à 45 °.

4. Filtre à liquides et bride de raccordement de filtre selon la revendication 1 ou 2, **caractérisés en ce que**, à la place de la caractéristique g) de la revendication 1, on prévoit que l'axe central (70) des surfaces périphériques extérieures (201', 202', 203') qui sont disposées concentriquement les unes aux autre et l'axe central longitudinal (10) du filtre à liquides (1) s'étendent parallèlement l'un à l'autre avec un décalage.

5. Filtre à liquides et bride de raccordement de filtre selon l'une quelconque des revendications 1 à 4, **caractérisés en ce que** le filtre à liquides (1) comporte, dans sa paroi périphérique (24) ou dans son couvercle (4), une ouverture d'évacuation de liquide qui est fermée pendant le fonctionnement et peut être libérée à volonté.

6. Filtre à liquides et bride de raccordement de filtre selon l'une quelconque des revendications précédentes, **caractérisés par** des moyens de blocage qui sont placés ou accrochés sur la périphérie extérieure du boîtier de filtre (2) et au moyen desquels on peut fixer le boîtier de filtre (2) sur la bride de raccordement de filtre (7) pour interdire des mouvements dans les directions axiales et périphériques de cette dernière.

7. Filtre à liquides et bride de raccordement de filtre selon la revendication 6, **caractérisés en ce que** le boîtier de filtre (2) peut être bloqué sur la bride de raccordement de filtre (7), au moyen des moyens de blocage, en regardant dans la direction périphérique, dans plusieurs positions angulaires par rapport à la bride de raccordement de filtre (7).

8. Filtre à liquides et bride de raccordement de filtre selon l'une quelconque des revendications précédentes, **caractérisés en ce que** la pièce moulée par injection qui constitue le boîtier de filtre (2) est réalisée en métal ou en matière plastique et **en ce que** le couvercle (4) est aussi une pièce moulée par injection en métal ou en matière plastique.
